# EUROPÄISCHE PATENTSCHRIFT

(11) **EP 1 808 365 B1**
(45) Veröffentlichungstag und Bekanntmachung des Hinweises auf die Patenterteilung: **07.04.2010**
(21) Anmeldenummer: 07000583.0
(22) Anmeldetag: 12.01.2007
(51) Int. Cl.: B62D 31/02

(54) **Dachmodulelement für Nutzfahrzeuge und Fahrzeuge zur Personenbeförderung**
Roof module element for commercial vehicles and vehicle for passenger transport
Elément de module de toit pour véhicules utilitaires et véhicules de transport de personnes

(30) Priorität: 17.01.2006 DE 102006002123
(43) Veröffentlichungstag der Anmeldung: 18.07.2007
(73) Patentinhaber: MAN Nutzfahrzeuge Aktiengesellschaft, 80976 München (DE)
(72) Erfinder: Gülke, Norbert, Dr., 31139 Hildesheim (DE); Krimmling, Harald, 38126 Braunschweig (DE); Bartha, Ernö, 38640 Goslar (DE)

(56) Entgegenhaltungen:
- DE-A1- 1 780 606
- US-A- 5 488 770
- US-A1- 2002 117 874

## Beschreibung

Die vorliegende Erfindung betrifft ein integriertes Dachmodulelement für Nutzfahrzeuge und/oder andere Fahrzeuge zur Personenbeförderung, insbesondere für Autobusse o. dgl., das einen oberen Längskantenbereich einer Fahrzeugstruktur bildet und ein oder mehrere zusätzliche Funktionselemente integriert hat.

Bei bekannten Fahrzeugen zur Personenbeförderung wie Omnibussen und Schienenfahrzeugen bildet die Verbindung der Seitenwände in Fahrzeuglängsrichtung mit dem Fahrzeugdach üblicherweise eine separate Baugruppe, der insbesondere aus optischen Gründen besondere Aufmerksamkeit bei der Konstruktion gewidmet werden muss. Von der Fahrzeugaußenseite her betrachtet ist die sog. Dachvoute ein wichtiges Teilelement, das wesentlich das Gesamtdesign des Fahrzeugs mitbestimmt. Die Innenseite dieser Dachvoute bildet bei bekannten Konstruktionen üblicherweise ein getrenntes Funktionsteil. Aus funktionaler Sicht ist die Außenseite für die wasserdichte Verbindung von Seitenwand und Fahrzeugdach zuständig, während die Innenseite bspw. Öffnungen, Gepäckablagen, Beleuchtungskörper, Belüftungselemente etc. enthalten kann. Zwischen den beiden getrennten Elementen befinden sich Installationen der Fahrzeugtechnik wie z.B. Wasser- und Klimarohre, Druckkessel, elektrische Leitungen und andere Komponenten.

Da bei einer getrennten Fertigung von Außenteil und Innenteil der Dachvoute sowie deren getrennter Montage am Fahrzeugaufbau relativ hohe Montagekosten entstehen, sind bei dieser Baugruppe Montagezeit- und Kosteneinsparungen wichtig. Zudem entstehen bei einer separaten Montage aller zwischen den beiden Voutenteilen befindlichen Fahrzeugkomponenten hohe Montagekosten, da die Zugänglichkeit oftmals nicht fertigungsgerecht hergestellt werden kann.

Bei bekannten Dachvoutenelementen werden die Fahrzeugkomponenten nach Montage der äußeren Dachvoute montiert, teilweise auch vor der Montage der Außenabdeckung. Die montierten Komponenten sind anschließend entweder überhaupt nicht mehr zugänglich oder nur über Innenklappen, die ein Bestandteil der inneren Dachvouten sind. Dadurch werden sowohl die Herstellungskosten der inneren Dachvoute als auch die Montagekosten erhöht, bspw. auch durch ein notwendiges Ausrichten der Klappen über die komplette Fahrzeuglänge.

Aus der DE 36 44 496 A1 ist eine Fahrzeugtragkonstruktion für Autobusse mit einer Vielzahl von Modulzellen bekannt, die im Verbund die Fahrzeuglänge eines bestimmten Fahrzeugtyps einer Fahrzeugreihe bestimmen. Sämtliche Außenmodule und Innenmodule sind hierbei ganzzahlig durch einen Faktor teilbar, wodurch die Forderung nach möglichst wenigen Fahrzeuglängen bei optimalen Sitzabständen für eine kostengünstige Fertigung des Fahrzeugs mit möglichst wenig unterschiedlichen Einzelteilen und möglichst vielen Gleichteilen weitgehend erfüllt werden soll. Die Dachmodule sind insbesondere zu großen Teilen vorgefertigt und können in diesem vorgefertigten Zustand aneinander gereiht werden.

Die DE 200 16 392 beschreibt ein modulares Dachsystem für Omibusse mit einem Dach, bestehend aus Innen- und Außenhaut und einer im Zwischenraum eingebrachten Isolation, ferner mit in Längsrichtung verlaufenden Lüftungs- und Klimakanälen, Gepäckablagen und seitlich am Dachprofil befestigten Rahmenprofilen für Fenster. Bei diesem modularen Dachsystem sind mehrere quer zu Fahrtrichtung und parallel im gegenseitigen Abstand zueinander angeordnete Integralträger mit dem Dachprofil lösbar verbunden, die auf in Längsrichtung des Fahrzeuges verlaufenden Längsprofilen verschiebbar und feststellbar geführt sind.

Die DE 199 09 735 A1 beschreibt schließlich einen Omnibusaufbau im seitlichen Dacheckbereich, in der Heckdachkuppel und im Heckeckstollen. Der Omibusaufbau weist je ein Gerippe für die Seitenwände, die Heckwand und für das Dach auf, mit einer außenliegenden Verblechung, die mit dem entsprechenden Gerippe verschweißt und bei dem sich in den Übergängen vom Dach in je eine Seitenwand, vom Dach in die Heckwand und von je einer Seitenwand in die Heckwand Versorgungsleitungen wie Elektrokabel, Heizungsleitungen und Pneumatikleitungen verlaufen. Es können weiterhin Geräte wie Pneumatikaggregate, Luftdruckvorratsbehälter, elektrische Steuergeräte und ähnliches eingebaut sein. Die Außenverblechung im Dacheckbereich, an der Heckdachkuppel und in den Heckeckstollen sind von außen her abnehmbar gestaltet, so dass damit die Versorgungsleitungen und Geräte von außen her montierbar und wartbar sind.

Aus der US 200210117874 A1 ist ein Omnibus mit einem einen Innenhohlraum aufweisenden Fahrzeugdach bekannt, in dem z. B. elektrische Leitungen angeordnet sind. Die Besonderheit wird hier darin gesehen, eine einzige durchgehende Dachhaut vorzusehen, die ohne Nieten ausgebildet ist, um Leckagen zu vermeiden.

Aus der gattungsbildenden DE 17 80 606 A1 ist bereits ein Dachmodulelement für Nutzfahrzeuge bekannt, bei dem (Fig. 3) auf einen seitlichen Randkantenbereich der Dachhaut von unten her ein hutförmiges Blechprofil aufgesetzt und angeschweißt wird, das dann einen sogenannten Dachrahmenträger ausbildet, der in einer Doppelfunktion gleichzeitig als Luftführungskanal dient. Ein derartiges Dachmodulelement wird im Rahmen der Montage durch Ansetzen und Verschweißen des zusätzlichen Blechprofils gebildet. Dies erfordert, insbesondere im Hinblick auf eine Großserienfertigung, einen erheblichen Zeit- und Montageaufwand, so dass die Ausbildung einer derartigen Dachmodulelement-Struktur auch relativ kostenintensiv ist. Dies insbesondere auch deshalb, weil in Verbindung mit dem Aufsetzen des hutprofilförmigen Bleches an der Unterseite der seitlichen Randkante der Dachaußenhaut auch zudem eine Regenrinne ausgebildet werden soll.

Demgegenüber ist es Aufgabe der vorliegenden Erfindung, ein Dachmodulelement für Nutzfahrzeuge oder andere Fahrzeuge zur Personenbeförderung zur Verfügung zu stellen, das im Rahmen der Montage, insbesondere im Hinblick auf eine Großserienfertigung, auf einfache und schnelle Weise sowie mit hoher Funktionssicherheit verbaut werden kann.

Diese Aufgabe wird gelöst mit den Merkmalen des Patentanspruches 1. Vorteilhafte Weiterbildungen sind Gegenstand der Unteransprüche.

Gemäß Patentanspruch 1 ist das Dachmodulelement als vor dem Fahrzeugeinbau vorgefertigtes, integriertes Dachmodulelement ausgebildet, in das ein oder mehrere zusätzliche Funktionselemente integriert sind. Weiter ist in das Dachmodulelement wenigstens eine Pneumatik- und/oder Hydraulikleitung integriert, die ein strukturversteifendes Element des Dachmodulelementes ausbildet.

Mit einem derartigen erfindungsgemäßen Dachmodulelement als Vormontagemodul wird erreicht, dass das Dachmodulelement bereits im Rahmen seiner Herstellung und damit vor dem Einbau im Rahmen der Montage komplett ausgestattet und auch auf seine Funktionsfähigkeit geprüft werden kann, so dass im Rahmen der Montage bei einer Großserienfertigung diese Dachmodulelemente als Ganzes lediglich noch auf den vorbereiteten Fahrzeugaufbau aufgesetzt und mittels geeigneter Verbindungstechnik dauerhaft verbunden werden brauchen, z. B. mittels einer Klebetechnik und/oder mittels Verschrauben oder Vernieten. Auf diese Weise kann zudem gewährleistet werden, dass in einem Arbeitsgang sowohl die linke als auch die rechte komplette Dachvoute auf einfache und kostengünstige Art und Weise mit dem Fahrzeugaufbau verbunden und hierdurch die Montagezeit des Gesamtfahrzeugs erheblich reduziert werden kann, was insbesondere im Rahmen einer Großserienfertigung zu einer erheblichen Kostenersparnis führt.

Gemäß einem weiteren erfindungsgemäßen Aspekt ist in das Dachmodulelement zudem wenigstens eine Pneumatik- und/oder Hydraulikleitungdergestalt integriert, dass diese ein strukturversteifendes Element des Dachmodulelementes ausbildet, diese quasi somit in einer Doppelfunktion gleichzeitig ein Versteifungselement als auch Bestandteil eines Pneumatik- und/oder Hydrauliksystems des Fahrzeuges bildet. Wenn in diesem Zusammenhang von einer Leitung die Rede ist, so ist damit grundsätzlich auch ein druckdicht verschlossener Druckspeicher gemeint, der die Gestalt einer Leitung aufweist und in Längsrichtung entlang des Fahrzeugdachs verläuft.

Gemäß einer bevorzugten erfindungsgemäßen Ausgestaltung kann zudem noch vorgesehen sein, wenigstens einen Luftführungskanal zusätzlich zu den Pneumatik- und/oder Hydraulikleitungen in das Dachmodulelement zu integrieren, bevorzugt dergestalt, dass auch dieser wenigstens eine Luftführungskanal ein zusätzliches strukturversteifendes Element des Dachmodulelementes ausbildet. Mit einem derartigen Aufbau ergibt sich eine besonders hohe Funktionsintegration in Verbindung mit einem Dachmodulelement.

Die erforderlichen Luftdrücke in einem Fahrzeug, bspw. der Vorratsdruck für das Bremssystem, die Druckluftversorgung für pneumatische Türen etc., werden nach heutigem Stand der Technik durch separat zu montierende Druckkessel zur Verfügung gestellt, deren Herstellung und Montage relativ aufwändig ist. Der Rohkörper des erfindungsgemäßen Dachmodulelements umfasst daher ein oder mehrere integrierte, vorzugsweise rund ausgeführte Druckkörper, die im Wesentlichen aus Rohrleitungen gebildet sind, die bei ausreichender Festigkeit wahlweise über die gesamte Fahrzeuglänge oder nur einen Teil davon ausgeführt sind. Sie dienen sowohl der Druckluftbevorratung als auch der Verteilung der Versorgungsdruckluft über entsprechend gewählte Längen. Diese Druckbehälter sind an Ihrem jeweiligen Ende durch ein entsprechend ausgeformtes Entstück abgedichtet und für den jeweils notwendigen Prüfdruck ausgelegt. In gleicher Weise können auch Hydraulikspeicher ausgebildet sein, die bspw. für den Fahrzeugantrieb oder für Nebenaggregate als Hydraulikdruckspeicher dienen können.

Neben der Platz sparenden und die Montagezeit reduzierenden Anordnung der erforderlichen Anzahl von derartigen Druckspeichern können diese einen wesentlichen Beitrag zur Strukturversteifung der Dachmodule liefern, da die Leitungen aufgrund ihrer notwendigen Druckstabilität auch eine hohe mechanische Stabilität liefern können, die bei entsprechend gewählter Verbindung bzw. Einbettung in das Dachmodul dessen mechanische Stabilität und Steifigkeit wesentlich erhöhen können.

Durch eine geschickte Anordnung der erfindungsgemäßen Druckspeicher im Dachmodulelement können sowohl die separaten Druckkessel als auch ein Teil der notwendigen Versorgungsleitungen zu den Verbrauchern dadurch entfallen, da sich nun die Druckkörper über die entsprechende Länge des Fahrzeugs oder einen Teil davon erstrecken. Zudem kann durch entsprechende Berechnung des verfügbaren Luftvolumens ein größeres Druckluftvolumen bereitgehalten werden. Dies kann zu einem höheren Sicherheitsniveau im Bereich der Bremsen führen. Bei pneumatisch zu betätigenden Fahrgasttüren kann auch bei über längere Zeit ausgeschaltetem Motor ein mehrmaliges Öffnen und Schließen problemlos gewährleistet werden. Darüber hinaus kann ein separater Druckkörper für einen druckluftbetriebenen Startermotor als Luftvorrat verwendet werden.

Durch die vorzugsweise symmetrische Anordnung der Dachvoutenmodule jeweils links und rechts entlang der Fahrzeuglängsachse ergeben sich ohne nennenswerten zusätzlichen Aufwand die Möglichkeiten zu mehreren getrennten Druckluftspeichern, größerem Speichervolumen und zu einer Reduzierung der Zahl und Länge der notwendigen Versorgungsleitungen.

Die Anschlüsse der Versorgungsleitungen werden vorzugsweise lokal in der Nähe der jeweils zu versorgenden Verbraucher durch Anbringung entsprechender Verbindungsanschlüsse bzw. Fittings realisiert. Ebenso können an vorteilhaften Stellen Drucksensoren installiert werden. Die Anschlüsse der Versorgungsleitungen an die Druckkörper erfolgt vorzugsweise im Innenbereich des jeweiligen Dachmoduls. Diese Anschlüsse können bspw. über geeignete Versorgungsklappen zugänglich gemacht werden.

Ein wesentlicher Vorteil dieser integrierten Druckkörper besteht darin, dass sie aufgrund ihrer Druckstabilität gleichzeitig den gesamten Dachmodulelementen eine erhöhte Stabilität und Festigkeit verleihen können. Die Auslegung der Gesamtfestigkeit des Dachmodulelements kann damit sowohl anhand der Berücksichtigung der erforderlichen Prüfdrücke als auch des notwendigen Festigkeitsanteils im Bezug auf die Fahrzeuggesamtfestigkeit erfolgen.

In gleicher Weise wie die Druckspeicher können auch die im Dachmodulelement integrierten Luftführungskanäle so ausgebildet sein, dass sie als strukturversteifendes Element fungieren können, das die Gesamtsteifigkeit des Dachmoduls erhöht.

Weiterhin können im Dachmodulelement ein oder mehrere integrierte Kanäle vorgesehen sein, die zur Aufnahme von verschiedenen Versorgungsleitungen dienen können. In jedem Fahrzeug müssen zur Versorgung von zusätzlichen elektrischen, pneumatischen und/oder hydraulischen Komponenten separat und/oder nachträglich Leitungen und Rohre verlegbar sein. Bisher ist deren Einbringung und Befestigung im Bereich des Innenbereichs des Fahrzeugdaches sehr aufwändig. Mit der Integration von einem oder mehreren Kanälen zur Aufnahme dieser Leitungen und Rohre (Kabelkanäle) nebst einem separaten Verschluss ist die sichere Montage gewährleistet. Diese sogenannten Kabelkanäle sind als separat zu beziehende Bauteile allgemein bekannt und ihr Maß ist genormt. Entsprechend ausgeprägt kann ein integrierter Kanal so konzipiert werden, dass am Markt verfügbare Deckel dafür genutzt werden können.

Alternativ oder zusätzlich kann das Dachvoutenmodul auch so ausgebildet sein, dass eine separate Befestigung käuflicher und nachrüstbarer Kabelkanäle getrennt von vorhandenen Kanälen möglich ist, ohne dass hierzu ein großer Montageaufwand erforderlich ist.

Eine weitere vorteilhafte Ausgestaltung der Erfindung sieht eine Integration von elektrischen Leitungen während des Herstellungsprozesses des Rohkörpers des Dachmodulelements derart vor, dass sich die elektrischen Leitungen im Innenbereich des Dachmodulelements befinden und zu verschiedenen Zwecken eingesetzt und verschaltet werden können. Es können eine oder mehrere elektrische Leitungen über die Gesamtlänge des Dachmodulelements verlaufen, die entweder den Transport elektrischer Energie oder elektrischer Signale gewährleisten können. Selbstverständlich können auch andere Leitungen zur Signalübertragung, bspw. Busleitungen, Glasfaserleitungen zur optischen Signalübertragung oder dergleichen vorgesehen sein. Durch eine fertigungstechnische Integration dieser Leitungen können kostengünstige nicht isolierte Leitungen aus elektrisch leitfähigem Material genutzt werden, da sie ihre Isolation durch das sie umgebende Kunststoffmaterial während des Herstellungsprozesses des Rohkörpers erhalten können. Durch geeignete Anordnung können diese Leitungen nicht nur an ihrem jeweiligen Anfang und Ende mit den zu verbindenden Komponenten bzw. Verbrauchern verbunden werden, sondern auch dazwischen. Hierzu wird die in diesem Bereich vorhandene Oberfläche des Innenbereichs des Dachmodulelements so ausgeformt, dass mittels Schraubtechnik eine Verbindung sicher hergestellt werden kann. Für serienmäßig notwendige elektrische Leitungen im Fahrzeug kann damit deren nachträgliche Montage und Befestigung entfallen.

Gemäß einer vorteilhaften Ausgestaltung der Erfindung können die bisher getrennt hergestellten und montierten Dachvoutenelemente nunmehr als integriertes Bauteil zur Verfügung gestellt werden, in das ein Großteil aller zu montierenden Komponenten bereits integriert ist. Zudem sind die Teile vorzugsweise sowohl für die linke als auch für die rechte Seite einsetzbar und aus diesem Grund vorzugsweise symmetrisch aufgebaut. Einzelne Modulelemente weisen vorzugsweise eine Länge auf, die je nach gewünschter Fahrzeuglänge eine Aneinanderreihung einer unterschiedlichen Anzahl dieser Dachmodulelemente ermöglicht. Die integrierten Modulelemente können außerhalb des Fahrzeugkörpers hergestellt, mit allen sonstigen Komponenten vormontiert und anschließend auf korrekte Funktion geprüft werden. Nach erfolgter Prüfung können beide Module mittels einer geeigneten Montageeinrichtung von oben auf die entsprechend vorbereitete Fahrzeugstruktur aufgesetzt und mittels Klebetechnik oder einer anderen geeigneten Verbindungstechnik mit der Fahrzeugstruktur dauerhaft verbunden werden. Damit kann gewährleistet werden, dass in einem Arbeitsgang jeweils die linken und rechten kompletten Dachseitenbereiche auf einfache und kostengünstige Weise mit der Fahrzeugstruktur verbunden werden und die Montagezeit des Gesamtfahrzeugs erheblich reduziert wird.

Das erfindungsgemäße integrierte Dachmodulelement kann insbesondere aus einem glasfaser- oder kohlefaserverstärktem gezogenen, insbesondere pultetrudiertem Kunststoffteil gefertigt sein, das in einem oder mehreren Arbeitsgängen hergestellt wird. Die äußere Dachelementverkleidung kann unterschiedlich gestaltet sein, was sich vorrangig nach dem geforderten Fahrzeugdesign richtet. Die Gestaltung ist insbesondere designabhängig hinsichtlich ihrer Formgebung, Oberflächengestaltung, z.B. Bombierung und des gewünschten Oberflächendesign. Sie kann sich von Fahrzeug zu Fahrzeug unterscheiden, was jedoch nicht ihre funktionale Bedeutung als Abgrenzung des Innenraums von äußeren Witterungseinflüssen und als integrales Bestandteil des integrierten Dachmodulelements ändert. Zur Gewährleistung eines optimierten Wärmeschutzes kann eine innenliegende Wärmeisolierung vorgesehen sein, die im gleichen Herstellungsverfahren aufgebracht werden kann und die Warm- oder Kaltluftkanäle gegen entsprechende Temperaturdifferenzen zur Außenluft isolieren kann.

Ein optionales, oben aufgesetztes Designelement kann zum Einen der separaten äußeren Formgebung zur Ausprägung spezieller Fahrzeugdesignelemente dienen. Zum Anderen kann es aber auch zur Sichtabgrenzung für evtl. sich äußerlich auf dem Fahrzeugdach befindliche sonstige Fahrzeugkomponenten wie bspw. Lüfter, Gastanks, Auspuffelemente etc. dienen. Das Designelement ist entweder integraler Bestandteil des integrierten Dachmoduls und wird in einem gemeinsamen Herstellungsverfahren gefertigt. Alternativ kann es auch als separates Teil nach Herstellung des Rohteils des Dachmoduls mit diesem verbunden werden, bspw. durch eine Klebe- und/oder Schraubverbindung.

Darüber hinaus können die Funktionselemente in Fahrzeuglängsrichtung klappbar ausgeführt sein, um den jederzeitigen Zugang zu seinem Innenbereich zu ermöglichen. Ein Nebeneffekt dieses Designelements kann darin bestehen, dass sie das durch Regen auf dem Dach des Fahrzeugs gesammelte Wasser am Herunterlaufen an den Fahrzeugseitenwänden hindern können. Das Wasser wird durch das Designelement gezielt nach vorn und hinten geleitet und kann somit separat vom Dach des Fahrzeuges so entfernt werden, dass Fahrgäste nicht beeinträchtigt werden.

Zusätzlich kann eine äußere Regenrinne an der Seitenband des Fahrzeugs integraler Bestandteil des erfindungsgemäßen Dachmodulelements sein. Sie verhindert das Herunterlaufen von Regenwasser an den Seitenscheiben, vor allem jedoch im Bereich der Einstiege an den Fahrzeuglängsseiten. Damit kann die ansonsten notwendige nachträgliche Montage von separaten Regenrinnen entfallen. Die äußere Form dieser Regenrinne kann sich aufgrund von Designvorgaben ändern, ohne dass sich hierdurch die Funktion ändert. Wie bei dem Designelement könnte eine seitliche Regenrinne auch separat mit dem Dachmodulelement verbunden werden, falls konstruktive Gründe dies erforderlich machen sollten.

Die Anbindung des Dachmodulelements zur Mittelbahn der äußeren Dachabdeckung des Fahrzeuges muss eine wasserdichte Verbindung ermöglichen. Dachmittelbahnen für Fahrzeuge können insbesondere aus geeignetem Kunststoff hergestellt sein, der auf Rollen angeliefert, vor der Montage abgelängt und anschließend auf der Fahrzeugstruktur verklebt wird. Alternativ können auch andere Materialien zum Einsatz kommen, wobei jedoch immer eine wasserdichte Anbindung an eine vorhandene Dachvoute zu gewährleisten ist. Das integrierte Dachvoutenmodul weist daher eine entsprechende Passform auf, auf deren zur Fahrzeugmitte gewandtem Schenkel die entsprechende Dachmittelbahn aufgebracht werden kann, bspw. mittels einer Verklebung oder einer Kunststoffverschweißung. Fahrzeuge werden teilweise in unterschiedlichen Breiten gefertigt. Bei Omnibussen können diese Breiten bspw. ca. 2,35 m, ca. 2,5 m oder auch ca. 2,55 m und mehr betragen. Zur Optimierung des Fertigungsablaufs kann deshalb der Schenkel der Passform so gewählt sein, dass bei einheitlicher Breite sowohl der Dachmittelbahn als auch bei einheitlicher Form des Dachmodulelements unterschiedliche Fahrzeugbreiten dadurch realisiert werden können, dass der Breitenausgleich durch Versatz der Dachmittelbahn auf dem entsprechenden Schenkel des Dachmodulelements erfolgen kann. Dessen entsprechender Übergangsbereich zur mittleren Dacheindeckung ist vorzugsweise so breit ausgeführt, dass eine Anpassung an unterschiedliche Dachbreiten auch bei Verwendung der jeweils gleichen Dachmodulelemente als auch ein gewisser Toleranzausgleich gewährleistet werden kann.

Ein vorzugsweise vorgesehenes Funktionselement im oberen Bereich einer Innendecke kann ein fester Bestandteil des Rohkörpers des Dachmodulelements sein. Das Funktionselement kann u. a. eine Öffnung für einen oben liegenden Kanal zu Umluftansaugung, einen feststehenden Teil eines Scharnierprofils für innere Voutenklappen, einen Ausschnitt für Beleuchtungskörper und eine Aufnahme für Befestigungsschienen für Haltestangen aufweisen.

Die vom Fahrzeuginnenraum sichtbare Form kann sich aufgrund von Designvorgaben je nach Fahrzeug unterscheiden. Die Befestigungsschiene für Haltestangen kann entweder ein separat zu montierendes Teil im Rohkörper des Dachmodulelements sein oder wird durch entsprechende Zusatzteile während des Herstellungsprozesses ausgeformt. In diese Befestigungsschiene können nach erfolgter Montage des integrierten vormontierten Dachmodulelements auf der Fahrzeugstruktur die im Fahrzeuginneren notwendigen Haltestangen im oberen Innenbereich fixiert werden. Gleichzeitig ist diese Befestigungsschiene so auszuführen, dass ggf. in der Haltestange verlaufende Kabel, bspw. für einen Haltewunschtaster, Entwerter etc, eine direkte Verbindung zum Innenraum des Dachmodulelements haben und somit ohne aus dem Fahrzeuginnenraum sichtbar zu sein mit den entsprechenden elektrischen Komponenten des Fahrzeugs verbunden werden können. Teile für notwendige Scharniere der inneren Voutenklappen können aufgrund von Designgesichtspunkten gewissen Änderungen unterworfen sein. Sie sind jedoch gemäß einer Ausgestaltung der Erfindung ein integraler Bestandteil des Rohkörpers des Dachvoutenprofils und stellen einen feststehenden Scharnierkörper der Voutenklappenscharniere dar.

Ein Funktionselement im Bereich der Anbindung zur inneren Fahrzeugseitenwand kann eine Öffnung eines Kanals für den Warm- und Kaltlufttransport in den Innenraum des Fahrzeugs aufweisen. In Verbindung mit den entsprechenden Gestaltungen für die Warm- und Kaltluftanlage erfolgt hier entweder die Anbindung an die Innenholme zwischen den Seitenfenstem zur Warmluftversorgung in den Bodenbereich des Fahrzeuginnenraums und/oder eine Ausströmung von Kaltluft oberhalb der Innenbereiche der Seitenscheibe. Eine bevorzugte Ausgestaltung des erfindungsgemäßen Dachmoduls sieht vor, dass dieses einen oder mehrere Kanäle zum Lufttransport aufweist. Hierbei ist mindestens ein Kanal für den Transport von Warm- oder Kaltluft und ggf. ein zweiter Kanal für den Transport von Umluft aus dem Fahrzeuginnenraum vorgesehen. Die Klimatisierung von Fahrzeuginnenräumen erfolgt üblicherweise über eine Klimaanlage mit entsprechender Anbindung an Luftkanäle, die hier integraler Bestandteil des Rohkörpers des Dachmodulelements sind. Über geeignete Gebläse kann bei Verwendung eines separaten Kanals für die Umluftansaugung aus dem gesamten oder einem separaten Teil des Fahrzeuginnenbereichs Luft angesaugt und zur Mischung mit Außenluft der Klimaanlage zugeführt werden. Die entweder erwärmte oder gekühlte durch die Klimaanlage produzierte Frischluft wird über den jeweiligen separaten Kanal den integrierten Ausströmen oberhalb der Seitenscheibe oder den innenliegenden Fensterholmen zugeführt.

Eine weitere vorteilhafte Ausgestaltung der vorliegenden Erfindung sieht vor, dass in Hohlräumen des erfindungsgemäßen Dachmodulelements angeordnete Befestigungsschienen integrale Bestandteile des Rohkörpers des Moduls bilden und vorzugsweise so ausgeformt sind, dass sie aufgrund eines Standardmaßes eine universelle Montierbarkeit von Zusatzkomponenten ermöglichen. Sie können vorzugsweise einer Normierung hinsichtlich Festigkeit und Maßhaltigkeit genügen. Sie können insbesondere der einfachen Befestigung von genormten Zusatzkomponenten der Fahrzeugtechnik dienen wie bspw. Gehäuse für elektrische Steuerungen, Relaisschalter, Montagehalter, Sicherungselemente, Schalter, Steckdosen etc. Diese zusätzlichen Befestigungsschienen können zudem zur zusätzlichen Versteifung des Dachmodulelements dienen. Hierzu können sei bereits während des Herstellungsvorganges des Rohkörpers des Dachmodulelements eingebracht werden.

Eine weitere bevorzugte Variante des erfindungsgemäßen Dachmodulelements weist ein oder mehrere integrierte Aufnahmen für Beleuchtungselemente auf. Alle Innenbereiche von Fahrzeugen zum Transport von Personen müssen ausreichend beleuchtet werden können. Die im Innenbereich anbringbaren Beleuchtungskörper müssen im Allgemeinen separat, vorzugsweise im Bereich der Innendecke montiert und elektrisch mit entsprechenden Versorgungseinheiten verbunden werden. Zur Reduzierung des dafür notwendigen Montageaufwandes wird im entsprechenden Bereich des Rohkörpers des Dachmodulelements eine Passform derart vorgesehen, dass lediglich die durchsichtigen Abdeckungen von entsprechenden Beleuchtungskörpern nebst der Beleuchtungseinheit noch nachträglich zu montieren sind. Die elektrische Verbindung wird dabei aus dem Innenbereich des Dachmodulelements entweder über separate elektrische Leitungen aus den Kabelkanälen oder durch Verbindung mit den integrierten elektrischen Leitungen im Rohkörper erreicht.

Eine weitere bevorzugte Variante des erfindungsgemäßen Dachmodulelements sieht ein integriertes Scharnierband als integraler Bestandteil des Rohkörpers des Dachmodulelements vor, das den festen Teil eines Scharniers bilden kann, dessen beweglicher Teil einen Teil einer inneren Voutenklappe darstellt. Alle inneren Voutenklappen müssen zudem sicher gegen unbeabsichtigtes Öffnen zu verschießen sein. Hierfür sind entsprechende Vorrichtungen bzw. Schlösser verfügbar. Integraler Bestandteil des Rohkörpers des Dachmodulelements ist hierbei eine entsprechend ausgeformte Aufnahme zur einfachen Befestigung von Klappenschlössern für die inneren Voutenklappen.

Ein im erfindungsgemäßen Dachmodulelement integrierter Luftkanal zur Umluftansaugung kann eine Verbindung zu einem der ggf. vorhandenen größeren Luftkanäle herstellen. Der integrierte Luftkanal hat eine im Rohkörper des Dachmodulelements integrierte Öffnung zu dem entsprechenden Kanal. Im Bereich des Funktionselements im oberen Bereich der Innendecke befindet sich die Öffnung zum Innenraum des Fahrgastbereichs. Wahlweise kann auch eine Öffnung zu dem oberen Bereich der Seitenscheiben und Fensterholme vorgesehen sein.

Als zusätzliches Merkmal der Erfindung können auch Pneumatikleitungen aus entsprechend biegsamen Materialien, vorzugsweise aus Kunststoff, bereits während des Herstellungsprozesses des Rohkörpers des Dachmodulelements integriert werden. Hiermit können bspw. die Verbindungen zu dem Druckluft-Prüfanschlüssen des Fahrzeuges kostengünstig so realisiert werden, dass sie nahezu im gesamten Fahrzeugbereich, bspw. auch zugänglich vom Innenraum, vorteilhaft platziert werden können.

Das erfindungsgemäße integrierte Dachmodulelement, teilweise auch als Dachvoutenmodul bezeichnet, kann wahlweise eine, mehrere oder alle der zuvor erwähnten zusätzlichen Konstruktionselemente aufweisen, so dass je nach Bedarf und je nach Konstruktion ein weitgehend vorgefertigtes Bauteil zur Verfügung gestellt werden kann, dass sich universell rechts oder links einsetzen lässt, da es symmetrisch aufgebaut ist. Das Modulelement lässt sich deutlich einfacher und kostengünstiger fertigen und montieren als die bisher verwendeten Konstruktionsbauteile, weist jedoch eine deutlich größere Variabilität auf als diese. Zudem kann es durch gezielte Maßnahmen deutlich stabiler und steifer ausgebildet werden, ohne dass diese Maßnahmen zu einer nennenswerten Gewichtszunahme des Bauteils und damit des Gesamtfahrzeugs führen müssen. Je nach Konstruktion und geschickter Integration der bisher getrennt zu montierenden Bauteile kann sogar eine Gewichtsreduzierung erreicht werden.

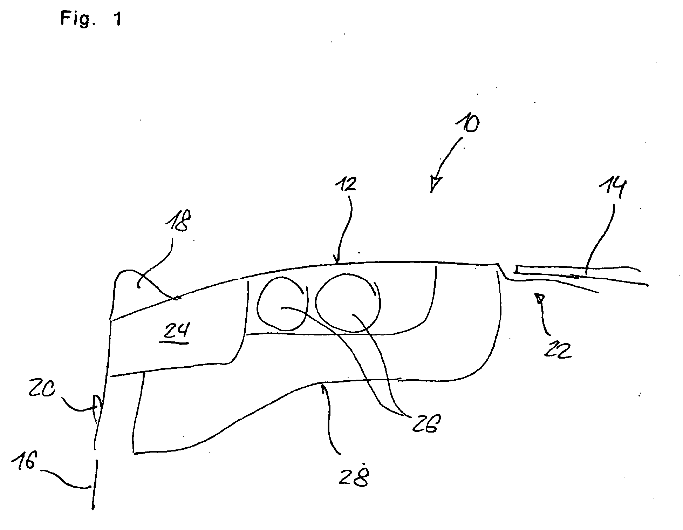

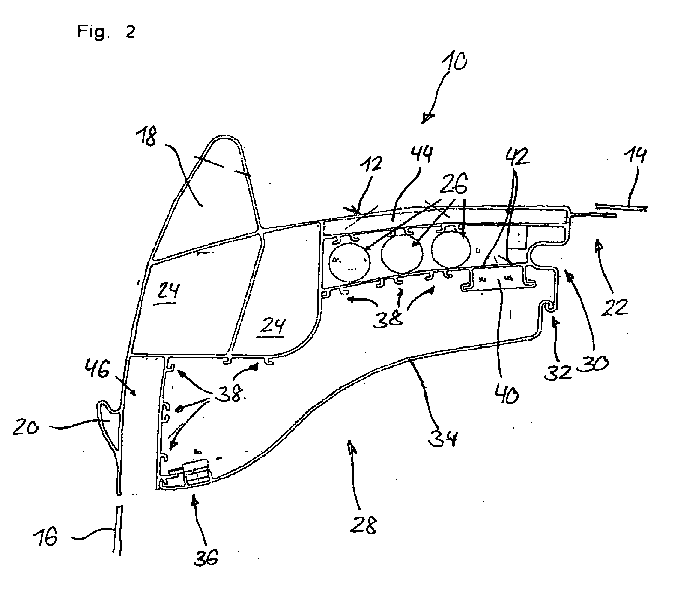

Die Erfindung wird nachfolgend anhand eines bevorzugten Ausführungsbeispiele unter Bezugnahme auf die beiliegenden Zeichnungen näher erläutert. Die Ausführungsbeispiele sollen das Verständnis der Erfindung erleichtern, sind jedoch keinesfalls einschränkend zu verstehen. Gleiche Teile in den Figuren 1 und 2 sind grundsätzlich mit gleichen Bezugszeichen versehen, weshalb auf eine mehrfache Erläuterung teilweise verzichtet wird.

Fig. 1 zeigt eine schematische Querschnittdarstellung durch ein integriertes Dachmodulelement in einer ersten, einfachen Ausführungsvariante.

Fig. 2 zeigt einen schematischen Querschnitt durch eine zweite Ausführungsvariante eines Dachmodulelements.

Die schematische Querschnittdarstellung der Fig. 1 illustriert den grundsätzfichen Aufbau eines erfindungsgemäßen Dachmodulelements 10, das einen seitlichen oberen Dachkantenbereich eines Fahrzeuges zur Personenbeförderung, insbesondere eines Omnibusses bildet. Die Fig. 1 zeigt einen in Fahrtrichtung des Fahrzeugs (nicht dargestellt) linken oberen Dachkantenbereich, der im Wesentlichen durch ein integriertes Dachmodulelement 10 gebildet ist. Das Dachmodulelement 10 wird oftmals auch als Dachvoute bzw. als Dachvoutenmodul bezeichnet.

Das integrierte Dachmodulelement 10 bildet im Dachkantenbereich sowohl einen Teil einer äußeren Dachhaut 12, der sich zur Dachmitte in einer flachen Dachfläche 14 und nach unten hin in den Seitenwänden 16 mit den darin befindlichen Seitenfenstern (nicht dargestellt) fortsetzt. Ein oben an der Kante des Dachmodulelements 10 angeordnetes und nach oben ragendes äußeres Designelement 18 kann bspw. eine längliche Finne oder ein erhabener Kanal o. dgl. sein, der Teile der oberen Dachfläche 14 zur Seite hin abdeckt und ggf. auch als Barriere gegen herablaufendes Regenwasser dienen kann. Eine zusätzliche äußere Regenrinne 20 ist vorzugsweise am vertikalen Seitenbereich des Moduls 10 integriert, kann aber wahlweise auch separat an diesem montierbar sein. Vorzugsweise sind jedoch die Teile 18 und 20 integraler Bestandteil des Moduls 10 und werden vorzugsweise zusammen mit diesem gefertigt bzw. bei dessen Fertigung an dieses angeformt.

Besonders vorteilhaft lässt sich das Dachmodulelement 10 mittels eines Kunststoffextrusionsverfahrens aus faserverstärktem Kunststoff herstellen, wobei sich die erwähnten sowie die weiter unten beschriebenen Funktionselemente in einfacher Weise ausbilden lassen.

Ein passender Übergangsbereich 22 dient zur Anbindung an die übrige Dachabdeckung bzw. Dachfläche 14 und kann mit dieser bspw. verschweißt oder verklebt sein.

Das integrierte Dachmodulelement 10 ist insbesondere durch ein oder mehrere integrierte Luftkanäle 24 gekennzeichnet, die zur Warm- und/oder Kaltluftführung dienen. Weiterhin sind ein oder mehrere Druckluftkanäle 26 enthalten, die in geeigneter Ausgestaltung zusätzlich zur Versteifung des gesamten Moduls 10 beitragen können. Die als Druckluftkanäle 26 bezeichneten Rohre sind vorzugsweise so stabil ausgebildet, dass sie als Druckspeicher bzw. als Druckfluidreservoire für verschiedene Fahrzeugfunktionen fungieren können, bspw. für die pneumatisch betätigbaren Fahrzeugtüren, für eine pneumatisch betätigbare Fahrzeugbremse o. dgl. Wahlweise können diese Druckspeicher auch als Hydraulikspeicher fungieren. Hierzu werden die Rohre auf die notwendige Länge miteinander verbunden und an den Enden druckdicht verschlossen. Werden sie mit geeigneten Anschlüssen versehen, so können sie als fest eingebaute und universell verwendbare Druckspeicher fungieren, die zusätzlich zur mechanischen Versteifung des gesamten Dachmodulelements 10 beitragen können.

Zum Fahrzeuginneren ist das Dachmodulelement 10 mit einer geeigneten glattflächigen Innenabdeckung 28 versehen, die wie die übrigen Teile integraler Bestandteil des Modulelements 10 ist und zusammen mit diesem gefertigt ist. Durch die glattflächige und leicht gewölbte Ausbildung der Innenabdeckung 28 entsteht eine optisch vorteilhafte Wirkung mit harmonischen Übergängen zu der inneren Dachfläche und den inneren Seitenwänden, wobei gleichzeitig die Luftführungskanäle und die sonstigen Funktionselemente kaschiert und abgedeckt sind.

Neben den oben erwähnten können zahlreiche weitere Funktionselemente vorhanden sein, die teilweise anhand der detaillierteren Querschnittdarstellung der Fig. 2 verdeutlicht sind.

Die schematische Darstellung der Fig. 2 zeigt einen Querschnitt durch ein weitere Ausführungsvariante eines erfindungsgemäßen integrierten Dachmodulelements 10, das neben den anhand der Fig. 1 bereits erläuterten Funktionselementen weitere integrierte Funktionen und Funktionselemente aufweist. So bezeichnet bspw. die Bezugsziffer 30 ein Funktionselement im oberen Bereich der Innendecke, das zur Befestigung verschiedener Teile dienen kann. Mittels des Funktionselements 30 können bspw. Haltegriffe, Schalter oder andere Teile montiert werden, die jedoch in Fig. 2 nicht dargestellt sind.

Scharniere 32 dienen zur Verankerung und Aufhängung einer Innenklappe 34, die einen Teil der Innenabdeckung 28 bilden kann. Durch diese Innenklappe 34 können bspw. Einbauteile, elektrische Funktionselemente u. dgl. zugänglich gemacht werden. In Nähe der Seitenwand können diese Innenklappen 34 vorzugsweise mittels geeigneter Klappenschlösser 36 verriegelt werden, die in der Innenabdeckung 28 verankert sind.

Das integrierte Dachmodulelement 10 ist insbesondere durch ein oder mehrere integrierte Luftkanäle 24 gekennzeichnet, die zur Warm- und/oder Kaltluftführung dienen. Weiterhin sind ein oder mehrere Druckluftkanäle 26 enthalten, die in geeigneter Ausgestaltung zusätzlich zur Versteifung des gesamten Moduls 10 beitragen können. Befestigungsschienen 38 können in mehrfacher Zahl vorhanden sein und zur Befestigung unterschiedlicher Versorgungseinheiten und verschiedener Einbauteile dienen. Die Befestigungsschienen 38 können wahlweise an unterschiedlichen Stellen im Inneren des Modulelements 10 angeordnet sein. Sie können wahlweise mit diesem zusammen ausgeformt werden oder nachträglich daran montiert werden, bspw. durch geeignete Schraub- oder Klebeverbindungen.

Weiterhin sind Kabelkanäle 40 erkennbar, aus denen je nach Bedarf einzelne Leitungen herausgeführt sein können. Elektrische Leitungen 42 sind vorzugsweise im extrudierten Kunststoff integriert, so dass für diese Leitungen 42 keine gesonderte Isolierung notwendig ist. Diese Leitungen 42 können sowohl als Versorgungs- als auch als Datenleitungen ausgebildet sein. Wahlweise oder zusätzlich können auch optische Datenleitungen in Gestalt von Lichtleitfasern in das Modul 10 integriert sein.

Weiterhin können ein oder mehrere integrierte Aufnahmen für Beleuchtungselemente (nicht dargestellt) vorhanden sein, die in einfacher Weise nach dem Einbau des Dachmodulelements 10 montiert werden können. Ein weiterer integrierter, relativ flacher Luftkanal 44 im oberen Bereich des Dachmoduls 10 kann zur Umluftansaugung dienen, während ein weiterer integrierter Luftkanal 46 im seitlichen Bereich des Dachmoduls 10 zur Warm- und Kaltluftversorgung vorgesehen sein kann. Der Luftkanal 46 ist vorzugsweise mit den Luftkanälen der Seitenwand (nicht dargestellt) verbunden, die zu den Luftausströmöffnungen im Fenster- bzw. Bodenbereich des Fahrzeuginnenraums führen.

Anhand der Figuren 1 und 2 wird deutlich, dass das integrierte Dachmodulelement 10 neben einer Vielzahl von zusätzlichen Funktionselementen auch alle wesentlichen Luftführungskanäle, Datenleitungen etc. aufnehmen kann. Darüber hinaus können Druckspeicher integriert sein, die wesentlich zur zusätzlichen Versteifung des Dachmodulelements 10 beitragen können. Da zudem der Fahrzeuginnenraum über eine glattflächige Verkleidung verfügt, ist zudem eine optisch vorteilhafte Wirkung erzielt. Der Fertigungsaufwand kann aufgrund der modularen Bauweise, der Integration der Einbauteile und Kanäle sowie der Möglichkeit, das gesamte Bauteil und dessen Funktionen vor dem Einbau in das Fahrzeug zu testen, erheblich reduziert werden. Das integrierte Bauteil lässt sich in effizienter und kostengünstiger Weise aus Kunststoff herstellen, bspw. mittels eines geeigneten Extrusionsverfahrens, bei dem die wesentlichen Gestaltungselemente und Funktionen bereits berücksichtigt werden können. Glattflächige und mechanisch stabile Übergänge zu den übrigen Fahrzeugteilen lassen sich wahlweise durch Klebe- und/oder Schraubverbindungen herstellen, so dass im Ergebnis ein optisch vorteilhaftes und mechanisch sehr stabiles Konstruktionsbauteil für Nutzfahrzeuge zur Verfügung gestellt werden kann.

## Patentansprüche

1. Dachmodulelement für Nutzfahrzeuge oder andere Fahrzeuge zur Personenbeförderung, das einen oberen Längskantenbereich einer Fahrzeugstruktur bildet, **dadurch gekennzeichnet, dass** das Dachmodulelement (10) als vor dem Fahrzeugeinbau vorgefertigtes, integriertes Dachmodulelement ausgebildet ist, in das ein oder mehrere zusätzliche Funktionselemente integriert sind, und
dass in das Dachmodulelement (10) wenigstens eine Pneumatik- und/oder Hydraulikleitung (26) integriert ist, die ein strukturversteifendes Element des Dachmodulelementes (10) ausbildet.

2. Dachmodulelement nach Anspruch 1, **dadurch gekennzeichnet, dass** in das Dachmodulelement (10) wenigstens ein Luftführungskanal (24) integriert ist.

3. Dachmodulelement nach Anspruch 1, **dadurch gekennzeichnet, dass** der wenigstens eine Luftführungskanal (24) ein strukturversteifendes Element des Dachmodulelements (10) bildet.

4. Dachmodulelement nach einem der Ansprüche 1 bis 3, **dadurch gekennzeichnet, dass** die wenigstens eine Pneumatik- und/oder Hydraulikleitung als geschlossener Druckspeicher, insbesondere als Vorratsbehälter zur Druckluft- bzw. zur Druckfluidversorgung ausgebildet ist.

5. Dachmodulelement nach Anspruch 4, **dadurch gekennzeichnet, dass** der Druckspeicher je nach erforderlicher Länge zu beiden Seiten jeweils mit einem druckdichten Endstück verschlossen ist.

6. Dachmodulelement nach einem der voranstehenden Ansprüche, **dadurch gekennzeichnet, dass** im Dachmodulelement (10) zusätzliche elektrische Daten- und/oder Versorgungsleitungen (42) und/oder optische Datenleitungen integriert sind.

7. Dachmodulelement nach Anspruch 6, **dadurch gekennzeichnet, dass** die Leitungen im Dachmodulelement (10) eingeformt oder eingegossen und von diesem weitgehend isolierend umschlossen sind.

8. Dachmodulelement nach Anspruch 6 oder 7, **dadurch gekennzeichnet, dass** in das Dachmodulelement (10) Befestigungseinrichtungen für Kabelkanäle und/oder für Leitungsführungen integriert sind.

9. Dachmodulelement nach einem der Ansprüche 6 bis 8, **dadurch gekennzeichnet, dass** die Leitungen (42) über mehrere Anschlusseinrichtungen zur Kontaktierung von Verbrauchern und/oder sonstigen elektrischen Komponenten verfügen.

10. Dachmodulelement nach einem der voranstehenden Ansprüche, **dadurch gekennzeichnet, dass** das Dachmodulelement (10) im Querschnitt weitgehend symmetrisch ausgebildet ist und wahlweise auf beiden Fahrzeugseiten einbaubar ist.

11. Dachmodulelement nach einem der voranstehenden Ansprüche, **dadurch gekennzeichnet, dass** mehrere Dachmodulelemente (10) über Anschlüsse und Verbindungsstellen wahlweise über einen Teil oder weitgehend die gesamte Fahrzeuglänge aneinander reihbar sind.

12. Dachmodulelement nach einem der voranstehenden Ansprüche, **dadurch gekennzeichnet, dass** äußere Funktionselemente (18) wie Regenrinnen (20), Längsfinnen o. dgl. am Dachmodulelement (10) angeformt sind.

13. Dachmodulelement nach einem der Ansprüche 1 bis 12, **dadurch gekennzeichnet, dass** zusätzliche äußere Funktionselemente (18) wie Regenrinnen (20), Längsfinnen o. dgl. nachträglich am Dachmodulelement (10) montierbar sind.

14. Dachmodulelement nach einem der voranstehenden Ansprüche, **dadurch gekennzeichnet, dass** mittels eines Übergangsbereichs (22) zu einer mittleren Dachfläche (14) des Fahrzeugs eine Anpassbarkeit an unterschiedliche Fahrzeug- und Dachbreiten gegeben ist.

15. Dachmodulelement nach einem der voranstehenden Ansprüche, **dadurch gekennzeichnet, dass** im Bereich der Innenverkleidung (28) Befestigungselemente für Haltestangen, Beleuchtungskörper, Leitungsschienen und/oder Klappen o. dgl. integriert oder angeformt sind.

16. Dachmodulelement nach einem der voranstehenden Ansprüche, **dadurch gekennzeichnet, dass** im Bereich der Innenverkleidung (28) Scharniere (32) und/oder Verriegelungselemente (36) für Service- und/oder Gepäckfachklappen (34) integriert oder angeformt sind.

17. Dachmodulelement nach einem der Ansprüche 2 bis 16, **dadurch gekennzeichnet, dass** die integrierten Luftführungskanäle (24; 44; 46) Verbindungs- oder Anschlussbereiche für eine Kalt- und/oder Warmluftversorgung des Fahrzeuginnenraums aufweisen.

18. Dachmodulelement nach Anspruch 17, **dadurch gekennzeichnet, dass** die Verbindungs- oder Anschlussbereiche mit Luft führenden Innenholmen zwischen Seitenscheiben des Fahrzeugs in Verbindung stehen.

19. Dachmodulelement nach Anspruch 17 oder 18, **dadurch gekennzeichnet, dass** die Verbindungs- oder Anschlussbereiche mit Ausströmöffnungen oberhalb von Innenbereichen der Seitenscheiben des Fahrzeugs in Verbindung stehen.

20. Dachmodulelement nach einem der voranstehenden Ansprüche, **dadurch gekennzeichnet, dass** im hohlen Innenbereich des Dachmodulelements (10) Befestigungsschienen (38) zur Befestigung von genormten Zusatzkomponenten der Fahrzeugtechnik integriert sind.

21. Dachmodulelement nach Anspruch 20, **dadurch gekennzeichnet, dass** die Befestigungsschienen (38) als zusätzliche Versteifungselemente ausgebildet sind.

22. Dachmodulelement nach Anspruch 20, **dadurch gekennzeichnet, dass** neben den Befestigungsschienen (38) zusätzliche Versteifungselemente vorhanden sind.

23. Dachmodulelement nach einem der voranstehenden Ansprüche, **dadurch gekennzeichnet, dass** im Innenbereich des Dachmodulelements (10) vorbereitete Öffnungen zur Montage und zum elektrischen Anschluss von Beleuchtungskörpern eingeformt sind.

24. Dachmodulelement nach einem der voranstehenden Ansprüche, **dadurch gekennzeichnet, dass** das Dachmodulelement (10) aus Kunststoff mit oder ohne Faserverstärkung extrudiert ist.

25. Dachmodulelement nach einem der voranstehenden Ansprüche, **dadurch gekennzeichnet, dass** das Dachmodulelement (10) mit angrenzenden Kunststoff-Verkleidungselementen der Fahrzeugkarosse verklebt und/oder verschweißt ist.

## Claims

1. Roof module element for commercial vehicles or other vehicles for passenger transport, which forms an upper longitudinal edge area of a vehicle structure, **characterised in that** the roof module element (10) is designed as a prefabricated, integrated roof module element prior to fitting on the vehicle, in which roof module element one or several additional functional elements are integrated, and
**in that** at least one pneumatic and/or hydraulic line (26) is integrated into the roof module element (10), which line acts as an element of the roof module element (10) providing structural reinforcement.

2. Roof module element in accordance with claim 1, **characterised in that** at least one air duct (24) is integrated into the roof module element (10).

3. Roof module element in accordance with claim 1, **characterised in that** the air duct (24), of which there is at least one, acts as an element of the roof module element (10) providing structural reinforcement.

4. Roof module element in accordance with one of claims 1 to 3, **characterised in that** the at least one pneumatic and/or hydraulic line is designed as a closed pressure accumulator, in particular as a reservoir for the compressed-air and/or hydraulic fluid supply.

5. Roof module element in accordance with claim 4, **characterised in that** the pressure accumulator is sealed on both sides with a pressure-tight end piece, depending on the necessary length.

6. Roof module element in accordance with one of the claims above, **characterised in that** additional electrical data and/or supply lines (42) and/or optical data cables are integrated in the roof module element (10).

7. Roof module element in accordance with claim 6, **characterised in that** the lines are moulded or cast in the roof module element (10) and are encapsulated by the roof module element and insulated by it to a great extent.

8. Roof module element in accordance with claim 6 or 7, **characterised in that** fastenings for cable ducts and/or for cable routing are integrated into the roof module element (10).

9. Roof module element in accordance with one of claims 6 to 8, **characterised in that** the lines (42) possess several connection facilities for contacting loads and/or other electrical components.

10. Roof module element in accordance with one of the claims above, **characterised in that** the cross-section of the roof module element (10) is designed essentially symmetrically and can optionally be installed on both sides of the vehicle.

11. Roof module element in accordance with one of the claims above, **characterised in that** several roof module elements (10) can optionally be arranged in series over one part of or almost the entire length of the vehicle, using connectors and connection points.

12. Roof module element in accordance with one of the claims above, **characterised in that** outer functional elements (18) such as rain channels (20), longitudinal fins or similar are moulded on the roof module element (10).

13. Roof module element in accordance with one of claims 1 to 12, **characterised in that** additional outer functional elements (18) such as rain channels (20), longitudinal fins or similar may be retrofitted to the roof module element (10).

14. Roof module element in accordance with one of the claims above, **characterised in that** the roof module element can be adjusted to various vehicle and roof widths using a transition area (22) in relation to a central roof surface (14) of the vehicle.

15. Roof module element in accordance with one of the claims above, **characterised in that** fastening elements for handrails, lighting fixtures, cable bars and/or flaps or similar are integrated in or moulded to the area of the inner panel (28).

16. Roof module element in accordance with one of the claims above, **characterised in that** hinges (32) and/or locking elements (36) for service and/or storage locker flaps (34) are integrated in or moulded to the area of the inner panel (28).

17. Roof module element in accordance with one of claims 2 to 16, **characterised in that** the integrated air ducts (24; 44; 46) possess connection areas for supply of cold and/or warm air to the interior of the vehicle.

18. Roof module element in accordance with claim 17, **characterised in that** the connection areas are connected with air-carrying internal pillars between the side window panes of the vehicle.

19. Roof module element in accordance with claim 17 or 18, **characterised in that** the connection areas are connected with vent openings above the inside areas of the side window panes of the vehicle.

20. Roof module element in accordance with one of the claims above, **characterised in that** fastening rails (38) for fastening standardised additional vehicle system components are integrated in the hollow interior of the roof module element (10).

21. Roof module element in accordance with claim 20, **characterised in that** the fastening rails (38) are designed as additional reinforcement elements.

22. Roof module element in accordance with claim 20, **characterised in that** additional reinforcement elements are present as well as the fastening rails (38).

23. Roof module element in accordance with one of the claims above, **characterised in that** prepared openings for the installation and the electrical connection of lighting fixtures are moulded in the interior of the roof module element (10).

24. Roof module element in accordance with one of the claims above, **characterised in that** the roof module element (10) is extruded from plastic with or without fibre reinforcement.

25. Roof module element in accordance with one of the claims above, **characterised in that** the roof module element (10) is bonded and/or welded to neighbouring plastic trim elements of the vehicle body.

## Revendications

1. Elément de module de pavillon pour véhicules industriels ou autres véhicules pour le transport de personnes, qui forme une partie supérieure du bord longitudinal d'une structure de véhicule, **caractérisé en ce que** l'élément de module de pavillon (10) est conçu comme élément de module de pavillon intégré, préfabriqué avant le montage du véhicule, dans lequel sont intégrés un ou plusieurs éléments fonctionnels supplémentaires, et
**en ce que** l'élément de module de pavillon (10) possède au moins une conduite pneumatique et/ou hydraulique (26), qui forme un élément de renforcement de la structure de l'élément de module de pavillon (10).

2. Elément de module de pavillon selon la revendication 1, **caractérisé en ce qu'**au moins un conduit d'air (24) est intégré à l'élément de module de pavillon (10).

3. Elément de module de pavillon selon la revendication 1, **caractérisé en ce qu'**au moins le conduit d'air (24) prévu forme un élément de renforcement de la structure de l'élément de module de pavillon (10).

4. Elément de module de pavillon selon l'une des revendications 1 à 3, **caractérisé en ce qu'**au moins la conduite pneumatique et/ou hydraulique prévue est conçue comme accumulateur sous pression fermé, en particulier comme réservoir de réserve pour l'alimentation en air comprimé ou en fluide sous pression.

5. Elément de module de pavillon selon la revendication 4, **caractérisé en ce que** l'accumulateur sous pression est obturé de chaque côté par un élément final étanche à la pression en fonction de la longueur nécessaire.

6. Elément de module de pavillon selon l'une des revendications mentionnées précédemment, **caractérisé en ce que** des câbles électriques supplémentaires de données et/ou d'alimentation (42) et/ou des câbles de données optiques sont intégrés à l'élément de module de pavillon (10).

7. Elément de module de pavillon selon la revendication 6, **caractérisé en ce que** les câbles sont moulés ou coulés dans l'élément de module de pavillon (10) et enveloppés en grande partie de manière isolante par rapport à celui-ci.

8. Elément de module de pavillon selon la revendication 6 ou 7, **caractérisé en ce que** des dispositifs de fixation pour gaines de câbles et/ou pour câblages sont intégrés à l'élément de module de pavillon (10).

9. Elément de module de pavillon selon l'une des revendications 6 à 8, **caractérisé en ce que** les câbles (42) disposent de plusieurs dispositifs de raccordement pour brancher des consommateurs et/ou d'autres composants électriques.

10. Elément de module de pavillon selon l'une des revendications mentionnées précédemment, **caractérisé en ce que** l'élément de module de pavillon (10) est conçu en grande partie de manière symétrique dans sa section transversale et peut être monté au choix de chaque côté du véhicule.

11. Elément de module de pavillon selon l'une des revendications mentionnées précédemment, **caractérisé en ce que** plusieurs éléments de module de pavillon (10) peuvent être disposés les uns derrière les autres via des raccordements et des points de liaison au choix sur une partie ou en grande partie sur toute la longueur du véhicule.

12. Elément de module de pavillon selon l'une des revendications mentionnées précédemment, **caractérisé en ce que** des éléments fonctionnels extérieurs (18) tels que des gouttières (20), des ailerons longitudinaux ou des éléments similaires sont moulés au niveau de l'élément de module de pavillon (10).

13. Elément de module de pavillon selon l'une des revendications 1 à 12, **caractérisé en ce que** des éléments fonctionnels extérieurs supplémentaires (18) tels que des gouttières (20), des ailerons longitudinaux ou des éléments similaires peuvent être montés après coup au niveau de l'élément de module de pavillon (10).

14. Elément de module de pavillon selon l'une des revendications mentionnées précédemment, **caractérisé en ce qu'**il est possible d'adapter l'élément de module de pavillon (10) aux différentes largeurs de véhicule et de pavillon au moyen d'une zone de transition (22) par rapport à une surface de pavillon centrale (14) du véhicule.

15. Elément de module de pavillon selon l'une des revendications mentionnées précédemment, **caractérisé en ce que** des éléments de fixation pour des barres de retenue, des boîtiers d'éclairage, des rails de câbles et/ou des trappes ou des éléments similaires sont intégrés ou moulés au niveau de l'habillage intérieur (28).

16. Elément de module de pavillon selon l'une des revendications mentionnées précédemment, **caractérisé en ce que** des charnières (32) et/ou des éléments de verrouillage (36) destinés à des trappes d'entretien et/ou des portillons pour compartiments à bagages (34) sont intégrés ou moulés au niveau de l'habillage intérieur (28).

17. Elément de module de pavillon selon l'une des revendications 2 à 16, **caractérisé en ce que** les conduits d'air (24 ; 44 ; 46) intégrés présentent des zones de liaison ou de raccordement pour une alimentation en air frais et/ou chaud de l'habitacle du véhicule.

18. Elément de module de pavillon selon la revendication 17, **caractérisé en ce que** les zones de liaison ou de raccordement sont reliées à des montants intérieurs guidant l'air entre les vitres latérales du véhicule.

19. Elément de module de pavillon selon la revendication 17 ou 18, **caractérisé en ce que** les zones de liaison ou de raccordement sont reliées à des buses de diffusion d'air au-dessus des parties intérieures des vitres latérales du véhicule.

20. Elément de module de pavillon selon l'une des revendications mentionnées précédemment, **caractérisé en ce que** des rails de fixation (38) servant à fixer des composants supplémentaires normalisés de la technique de véhicule sont intégrés à la partie intérieure creuse de l'élément de module de pavillon (10).

21. Elément de module de pavillon selon la revendication 20, **caractérisé en ce que** les rails de fixation (38) sont conçus comme éléments de renfort supplémentaires.

22. Elément de module de pavillon selon la revendication 20, **caractérisé en ce que** des éléments de renfort supplémentaires sont montés en plus des rails de fixation (38).

23. Elément de module de pavillon selon l'une des revendications mentionnées précédemment, **caractérisé en ce que** des ouvertures préparées pour le montage et le raccordement électrique d'appareils d'éclairage sont moulées dans la partie intérieure de l'élément de module de pavillon (10).

24. Elément de module de pavillon selon l'une des revendications mentionnées précédemment, **caractérisé en ce que** l'élément de module de pavillon (10) est extrudé en matière plastique renforcée ou non par des fibres.

25. Elément de module de pavillon selon l'une des revendications mentionnées précédemment, **caractérisé en ce que** l'élément de module de pavillon (10) est collé et/ou soudé avec des éléments d'habillage en matière plastique voisins de la carrosserie du véhicule.
